# EUROPEAN PATENT APPLICATION

(11) **EP 3 470 694 A1**
(43) Date of publication of application: **17.04.2019**
(21) Application number: 18198508.6
(22) Date of filing: 03.10.2018
(51) Int. Cl.: F16C 7/02, B64D 27/26

(54) **STRUT ASSEMBLY AND METHOD OF FORMING**

(30) Priority: 10.10.2017 GB 201716552
(71) Applicant: GE Aviation Systems Limited, Cheltenham Gloucestershire GL52 8SF (GB)
(72) Inventor: SM, Khaja Mohiddin, 560066 Bangalore (IN); THAKARE, Dhiraj, 560066 Bangalore (IN); SONI, Navin, 560066 Bangalore (IN); KUMAR, Sandeep, 560066 Bangalore (IN); NAYAK, Subrata, 560066 Bangalore (IN); TAMARTHI, David Raju, 560066 Bangalore (IN)
(74) Representative: Williams, Andrew Richard

(57) **Abstract**

A strut assembly 20, 120 for an aircraft 10 can include a hollow rod 21, 121 having a body 22, 122 with distal ends 24, 26, 124, 126 spaced apart by a length 28 of the body 22, 122. A wire rope 30, 130 can be operably coupled to the hollow rod 21, 121, where ends 31, 32, 131, 132 of the rope 30, 130 can be coupled to the distal ends 24, 26, 124, 126 of the hollow rod 21, 121.

## Description

### BACKGROUND

Mechanical structures, such as chassis or frames, often experience forces that can cause components within the structure to shift in relative positioning. Struts are frequently used in such structures to support components against undesired compression or tensile loads.

Aircraft components can experience a large range of forces or stresses across a range of temperatures in operation. It can be beneficial to form a strut capable of being used in a variety of environments, where features of the strut can be tailored to the desired environment in operation.

### BRIEF DESCRIPTION

In one aspect, a strut assembly for an aircraft includes a hollow rod having a body with a first distal end spaced from a second distal end by a length of the body, a wire rope located inside the hollow rod and spaced from the body, the wire rope having a first end and a second end and operably coupled to the hollow rod with the first end operably coupled to the first distal end and the second end operably coupled to the second distal end, and a first clevis operably coupled to the first distal end and a second clevis operably coupled to the second distal end.

In another aspect, a method of forming a strut assembly includes operably coupling a first end fitting to a first end of a wire rope, operably coupling a second end fitting to a second end of the wire rope, locating the wire rope inside a hollow rod and spaced from a body of the hollow rod, operably coupling the first end fitting with a first distal end of the hollow rod, operably coupling the second end fitting with a second distal end of the hollow rod, and operably coupling a first clevis to the first end fitting and a second clevis to the second end fitting.

In yet another aspect, a method of transferring forces via a strut assembly having a hollow rod and clevis at first and second ends of the hollow rod includes transferring compressive force via the hollow rod, and transferring a tensile load via a wire rope within the hollow rod where the wire rope and hollow rod are operably coupled at their distal ends and spaced from each other along a length of the hollow rod.

### BRIEF DESCRIPTION OF THE DRAWINGS

In the drawings:
FIG. 1 is a schematic view of an aircraft having a strut assembly in accordance with various aspects described herein.
FIG. 2 is a cross-sectional view of a strut assembly that can be utilized in the aircraft of FIG. 1.
FIG. 3 illustrates a portion of the strut assembly of FIG. 2.
FIG. 4 is a cross-sectional view of a strut assembly that can be utilized in the aircraft of FIG. 1.
FIG. 5 illustrates a portion of the strut assembly of FIG. 4.
FIG. 6 is a flowchart illustrating a method of forming a strut assembly that can be utilized in the aircraft of FIG. 1.
FIGS. 7A-7G illustrate a method of forming the strut assembly of FIG. 2.
FIGS. 8A-8D illustrate a method of forming the strut assembly of FIG. 4.

### DETAILED DESCRIPTION

The described embodiments of the present disclosure are directed to a strut assembly. For purposes of illustration, the present disclosure will be described with respect to a strut assembly within an aircraft engine pylon. It will be understood, however, that the present disclosure is not so limited and can have general applicability throughout the aircraft, as well as in non-aircraft applications, other stationary or mobile applications, or commercial or residential applications.

As used herein "a set" can include any number of the respectively described elements, including only one element. Additionally, all directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present disclosure, and do not create limitations, particularly as to the position, orientation, or use of the present disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

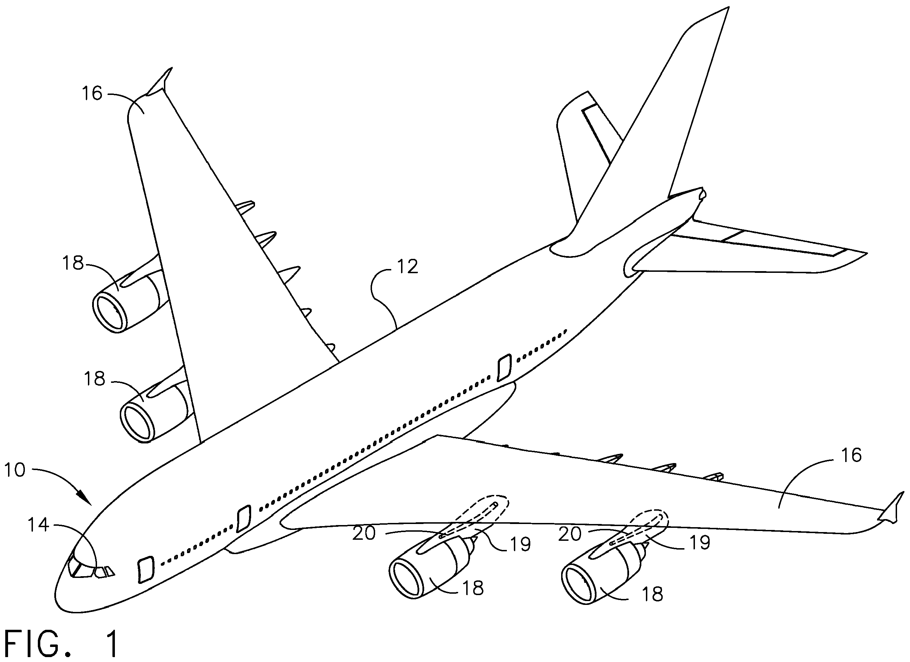

FIG. 1 illustrates an aircraft 10 that includes a fuselage 12, a cockpit 14 positioned in the fuselage 12, and wing assemblies 16 extending outward from the fuselage 12. The aircraft 10 can also include multiple engines, including turbine engines 18, which by way of non-limiting example, can be turbojet engines, turbofan engines, or turboprop engines. While a commercial aircraft 10 has been illustrated, it is contemplated that aspects of the disclosure described herein can be used in any type of aircraft. Further, while two turbine engines 18 have been illustrated on each of the wing assemblies 16, it will be understood that any number of turbine engines 18 including a single turbine engine 18 on the wing assemblies 16, or even a single turbine engine 18 mounted in the fuselage 12 can be included.

The turbine engine 18 can be secured to the wing assembly 16 by way of an engine pylon 19. A strut assembly 20 can be mounted within the engine pylon 19 such that internal forces or stresses generated by engine operation can be transferred through the strut assembly 20 to the structure of the aircraft 10. It will be understood that while illustrated within the engine pylon 19, the strut assembly 20 can be included anywhere within the aircraft 10, including within the turbine engine 18, as desired.

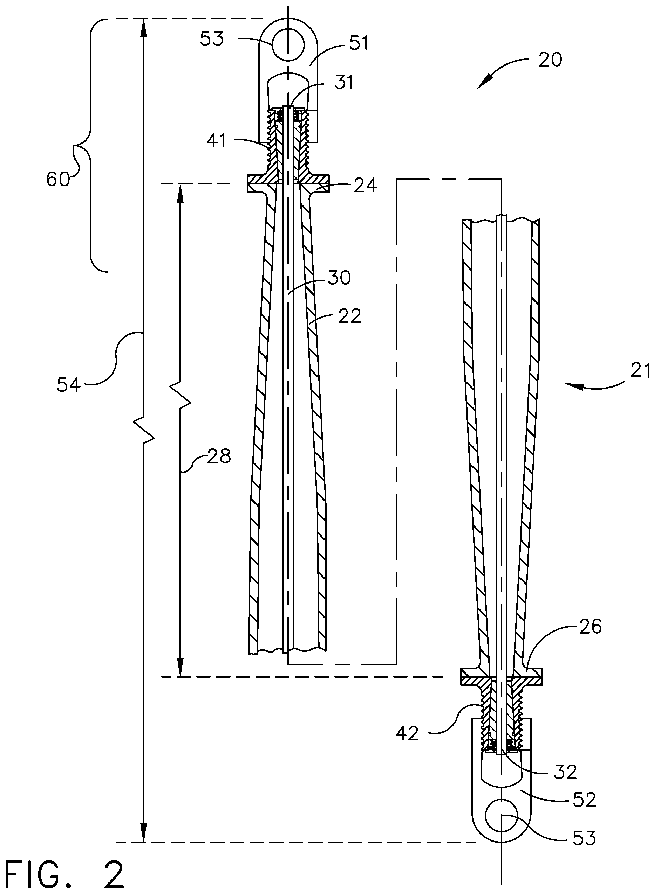

Turning to FIG. 2, the strut assembly 20 can include a hollow rod 21 having a body 22 with a first distal end 24, a second distal end 26, and a length 28 separating the first and second distal ends 24, 26 which can include a lip, flange, bevel, or other structural element. While the hollow rod 21 has been illustrated as having a variable cross-section or profile, it will be understood that the hollow rod 21 can be shaped in any suitable manner. The hollow rod 21 can include any suitable material including, by way of non-limiting example, a metallic material such as aluminum, a non-metallic material such as e-glass, or a composite material such as a polyester-matrix composite as desired.

A wire rope 30 having a first end 31 and a second end 32 can be positioned within the hollow rod 21. While the term "wire" is used it will be understood that the wire rope 30 can include any suitable material including a metallic material such as carbon steel or aircraft cable or a non-metallic material such as kevlar or nomex. Additionally, the wire rope 30 can include a cord composed of a single strand, or more typically composing multiple strands that are twisted or braided, in non-limiting examples.

The first end 31 of the wire rope 30 can be coupled to the first distal end 24 of the hollow rod 21, the second end 32 of the wire rope 30 can be coupled to the second distal end 26 of the hollow rod 21. The wire rope 30 can be spaced apart from the body 22 of the hollow rod 21. More specifically, in the illustrated example, a first end fitting 41 and a first clevis 51 are coupled to the first distal end 24 of the hollow rod 21, and a second end fitting 42 and a second clevis 52 can be coupled to the second distal end 26 of the hollow rod 21. The clevises 51, 52 can each include a bolt hole 53 for attachment within the aircraft 10 (FIG. 1), and an overall length 54 of the strut assembly 20 can be defined between the clevises 51, 52. The end fittings 41, 42 can have an essentially cylindrical structure and also include a threaded portion 78. The clevises 51, 52 can be threadably mounted onto the end fittings 41, 42 as shown, with the bolt holes 53 centered over the wire rope 30.

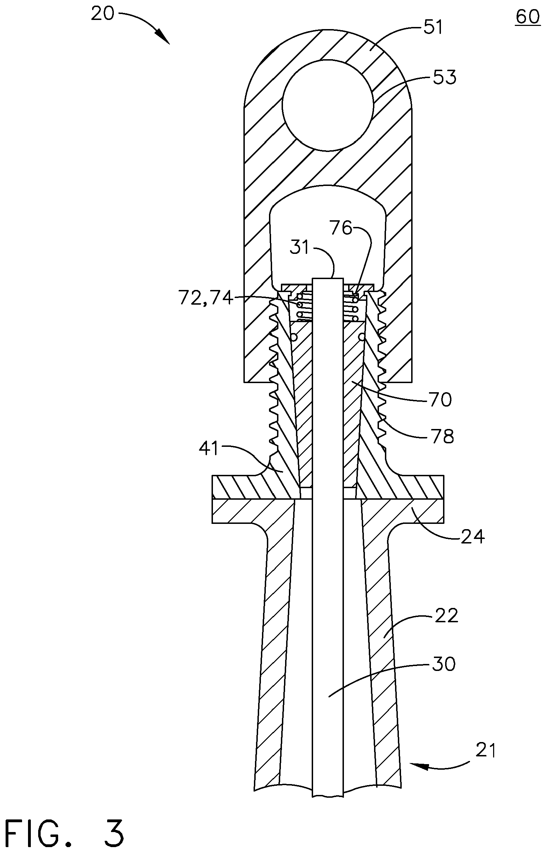

FIG. 3 illustrates a portion 60 of the strut assembly 20 of FIG. 2 where the structure, including that of the end fitting 41, is more clearly shown. For example, FIG. 3 more clearly illustrates that a wedge structure or wedge assembly 70 can be mounted on the first end 31 of the wire rope 30 to fully surround the wire rope 30. The wedge structure 70 can be formed from a metal such as aluminum or steel and include an elastic O-ring 71, which can be seated in a groove or simply fitted about a perimeter of the wedge structure 70 to aid in maintaining the position of the wedge structure 70 within the end fitting 41. A biasing element 72, illustrated as a spring 74, can be coupled with the wedge structure 70. An end fitting cap 76 can be coupled to the spring 74 to hold the spring 74 in a compressed position, such that the wedge structure 70 can be held in a seated position within the first end fitting 41.

When assembled, the wedge structure 70 can surround the wire rope 30 where the wire rope 30 can be tightened by a pre-tensioner device or other appropriate mechanism. The first end fitting 41 can then surround the wedge structure 70 adjacent the first distal end 24 of the hollow rod 21 as shown. The wedge structure 70 can be sized to couple with the first end fitting 41 using an interference fit, aided by the O-ring 71, and in this manner the first end fitting 41 can be mounted to the first end 31 of the wire rope 30. The first end fitting 41 can abut the first distal end 24 of the hollow rod 21, the tightened wire rope 30 can extend through the wedge structure 70 and biasing element 72, and the first clevis 51 can surround the first end fitting 41 and first end 31 of the wire rope 30. In addition, the wedge structure 70 can hold the wire rope 30 in a spaced relation apart from the body 22; an air gap can be maintained between the wire rope 30 and the body 22. It will be understood that the strut assembly 20 can be symmetric, and aspects described in the example of FIG. 3 can be applied to the second distal end 26 of the hollow rod 21, the second end 32 of the wire rope 30, the second end fitting 42, and the second clevis 52 as appropriate.

In operation, the strut assembly 20 can be mounted to a mechanical structure, such as the engine pylon 19 within the aircraft 10, to transfer forces between connected components. Compressive forces can occur when connected components shift in relative position toward one another, compressing the strut assembly 20. In such a case, compressive forces can be transferred via the hollow rod 21 by way of the clevises 51, 52, coupled to the end fittings 41, 42. Tensile forces, which can result from connected components shifting away from one another can be transferred via the wire rope 30 by way of the clevises 51, 52 coupled to the rope ends 31, 32. As the wire rope 30 is spaced apart from the body 22 of the hollow rod 21 it can be appreciated that an entire tensile load can be transferred between the clevises 51, 52 and the wire rope 30 without placing any tension on the body 22. In this manner, the hollow rod 21 can be used to solely transfer compressive forces through the body 22 while the wire rope 30 can be used to solely transfer tensile forces through the clevises 51, 52 between connected components.

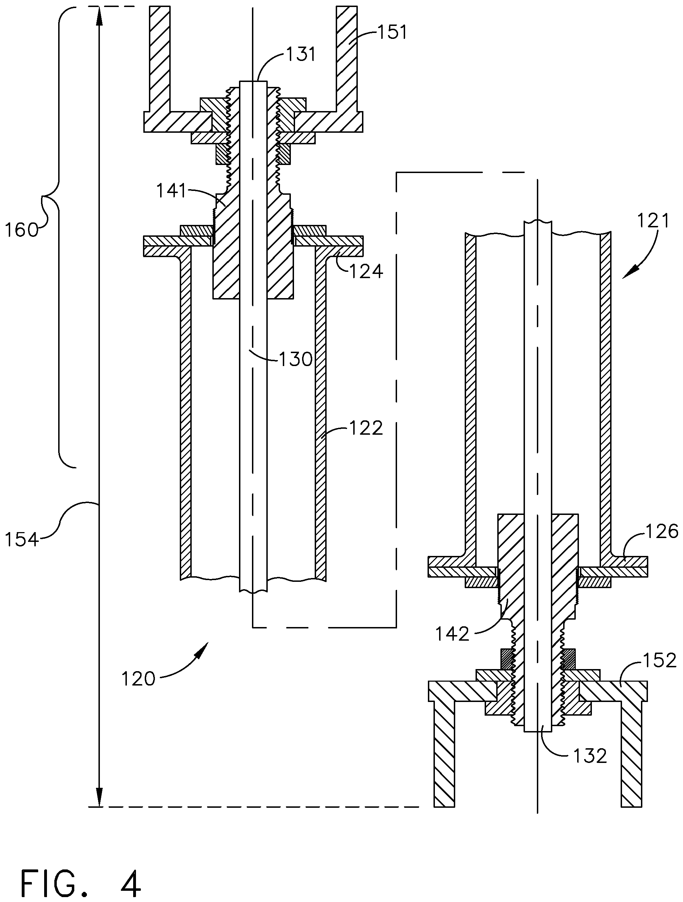

Referring now to FIG. 4, an alternative strut assembly 120 can be utilized in the aircraft 10. The strut assembly 120 is similar to the strut assembly 20, therefore, like parts will be identified with like numerals increased by 100, with it being understood that the description of the like parts of the first aspect applies to the second aspect, unless otherwise noted.

Similar to the earlier description, the strut assembly 120 can include a hollow rod 121 having a body 122 with a first distal end 124 and a second distal end 126. A wire rope 130 having a first end 131 and a second end 132 can be positioned within the hollow rod 121. The first end 131 of the wire rope 130 can be coupled to the first distal end 124 of the hollow rod 121, the second end 132 of the wire rope 130 can be coupled to the second distal end 126 of the hollow rod 121, and the wire rope 130 can be spaced apart from the body 122.

One difference is that in place of the wedge structure, the wire rope 130 can be coupled directly to a first end fitting 141 which can hold the rope 130 in spaced relation from the body 122 as described above.

The first end fitting 141 and a first clevis 151 can be coupled to the first distal end 124 of the hollow rod 121, and a second end fitting 142 and a second clevis 152 can be coupled to the second distal end 126 of the hollow rod 121. An overall length 154 of the strut assembly 120 can be defined between the clevises 151, 152 as shown.

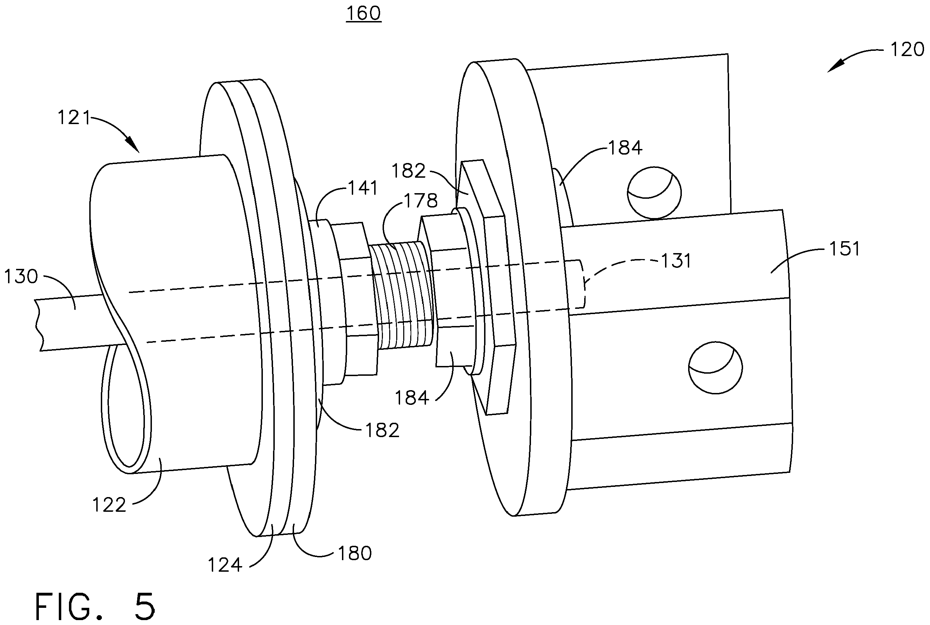

FIG. 5 illustrates a portion 160 of the strut assembly 120. A biasing element 172 such as a compression disc 180 can be coupled to the first distal end 124 of the hollow rod 121, and a locking nut 182 can compress and clamp the disc 180.

The first end fitting 141 can be mounted to surround and hold the first end 131 of the wire rope 130. A clevis nut 184 can be inserted through the first clevis 151 and threaded onto a threaded portion 178 of the first end fitting 141. Another locking nut 182 can also be coupled to the clevis nut 184 as desired.

Similar to that described above, in operation, the strut assembly 120 can be mounted to a mechanical structure to transfer forces between connected components. Compressive forces can be transferred along the body 122 of the hollow rod 121, while tensile forces can be transferred via the wire rope 130 by way of the clevises 151, 152 coupled to the rope ends 131, 132. The end fittings 141, 142 can hold the wire rope 130 spaced apart from the body 122 such that an entire tensile load can be transferred between the clevises 151, 152 via the wire rope 130 without placing tension on the body 122. In this manner, the hollow rod 121 can be used to solely transfer compressive forces while the wire rope 130 can be used to solely transfer tensile forces between connected components.

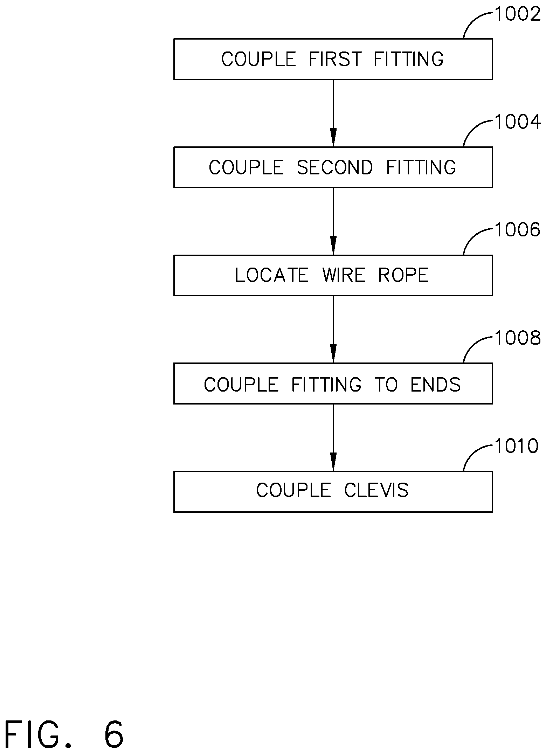

Turning to FIG. 6, a method of forming the strut assembly 20, 120 is illustrated. At 1002, the first end fitting 41, 141 can be operably coupled to the first end 31, 131 of the wire rope 30, 130. At 1004, the second end fitting 42, 142 can be operably coupled to the second end 32, 132. At 1006, the wire rope 30, 130 can be located inside the hollow rod 21, 121. In the example of FIG. 3 the wire rope 30 is positioned inside the hollow rod 21 before coupling the end fittings 41, 42 at 1004, while in the example of FIG. 5 the end fittings 141, 142 are coupled to the wire rope 30 at 1004 before positioning the wire rope 30 within the hollow rod 121 at 1006. At 1008 the first end fitting 41, 141 can be operably coupled to the first distal end 24, 124 of the hollow rod 21, 121, and the second end fitting 42, 142 can be operably coupled to the second distal end 26, 126. At 1010, the first clevis 51, 151 can be operably coupled to the first end fitting 41, 141, and the second clevis 52, 152 can be operably coupled to the second end fitting 42, 142. It will be understood that the method can be performed using any order of steps that is desired or advantageous for forming the strut assembly.

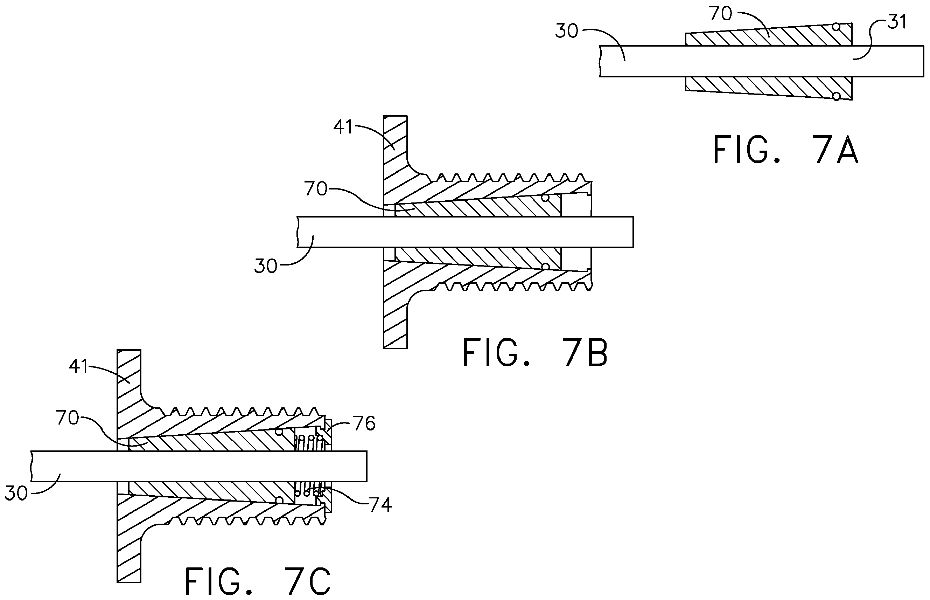

FIGS. 7A-7G illustrate forming the strut assembly 20 shown in the example of FIG. 3. In FIG. 7A, the wedge assembly 70 is coupled to the first end 31 of the wire rope 30.

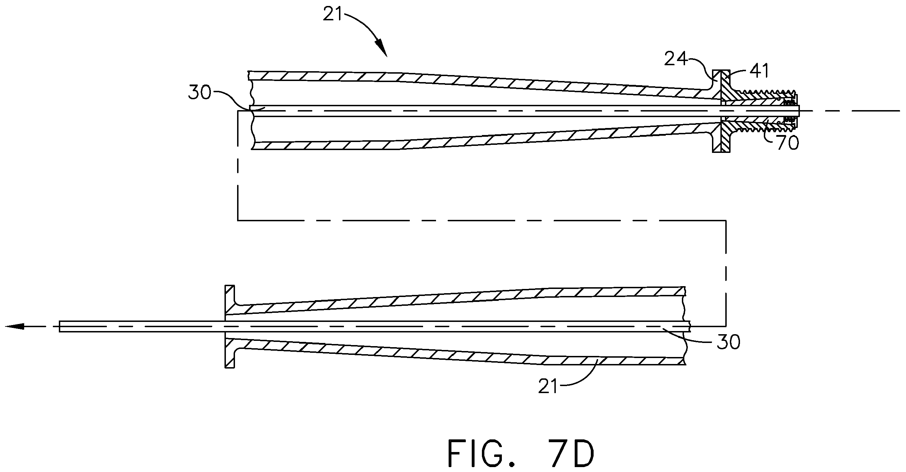

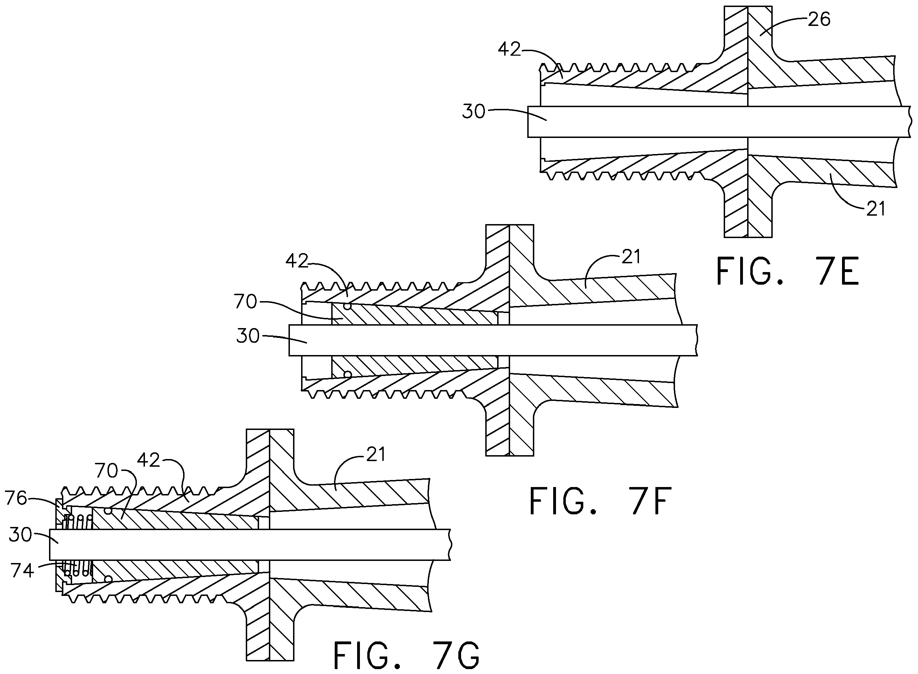

The first end fitting 41 is inserted over the wedge assembly 70 in FIG. 7B. The wedge assembly 70 can then be loaded by the spring 74 before placing the end fitting cap 76 as seen in FIG. 7C. The wire rope 30 can be located inside the hollow rod 21 in FIG. 7D, where the first end fitting 41 can be coupled to the first distal end 24 of the hollow rod 21 as shown. The rope 30 can be tightened, by a pre-tensioner or other device as described above, prior to coupling the second end fitting 42 to the wire rope 30 as illustrated in FIG. 7E. The examples of FIGS. 7D and 7E indicates that the wire rope 30 can be located within the hollow rod 21 before the second end fitting 42 is coupled to the rope 30.

The second end fitting 42 can be coupled to the second distal end 26 of the hollow rod 21, including by pressure fitting. Then, as shown in FIG. 7F, the wedge assembly 70 can be inserted into the second end fitting 42. FIG. 7G illustrates the wedge assembly 70 preloaded by the spring 74, and held by placement of the end fitting cap 76. The clevises 51, 52 can then be threaded onto the end fittings 41, 42 to form the completed strut assembly 20. It can be appreciated that the overall length 54 (FIG. 3) of the strut assembly 20 can be adjusted by threading the clevises 51, 52 to appropriate positions.

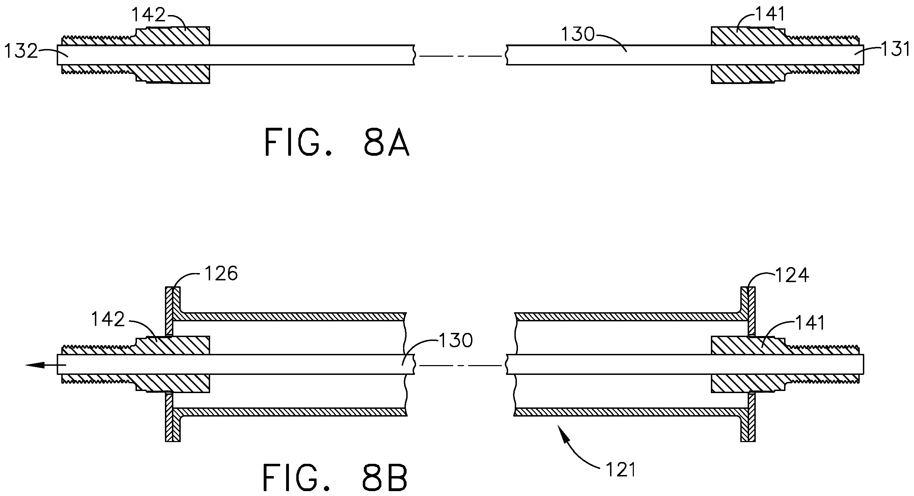

FIGS. 8A-8E illustrate forming the strut assembly 120 shown in the example of FIG. 5. In FIG. 8A, the first and second end fittings 141, 142 can be coupled directly to the first and second ends 131, 132 of the wire rope 130. FIG. 8B illustrates that the wire rope 130 can be located in the hollow rod 121 and tightened using a pre-tensioner or other device as described above. The end fittings 141, 142 can be coupled to the distal ends 124, 126 of the hollow rod 121; the example of FIG. 8B indicates that both end fittings 141, 142 are coupled to the wire rope 130 before locating the wire rope 130 inside the hollow rod 121.

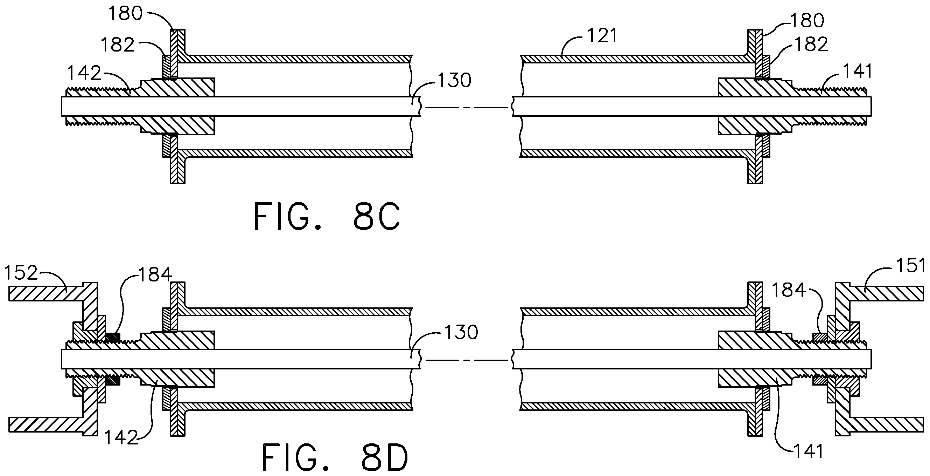

FIG. 8C shows the compression discs 180 are clamped onto the end fittings 141, 142, and tightened by the locking nuts 182. FIG. 8D illustrates the clevises 151, 152 and clevis nuts 184 can be threaded onto the end fittings 141, 142. The overall length 154 (FIG. 5) of the strut assembly 120 can be adjusted by threading the clevises 151, 152 to appropriate locations, and the clevis nuts 184 can be used to fix the position of the clevises 151, 152 after adjustment.

The aspects of the disclosure described above provide for a variety of benefits. Traditional strut designs typically transfer loads from the clevis to a central rigid rod at the center of the hollow tube via a threaded connection; in operation, forces concentrated on these threads can reduce the useful life of the strut. It can be appreciated that fitting the wedge assembly or end fitting directly to the wire rope without use of threads can reduce part complexity and extend the useful life of the strut assembly of the present disclosure. In addition, enabling the use of composite materials for the strut assembly can provide significant weight reduction while retaining durability or strength in operation, which can reduce the overall weight of a structure that includes strut assemblies as described herein. In the example of the aircraft 10, reducing aircraft weight can lead to increased efficiencies and decreased operating costs.

To the extent not already described, the different features and structures of the various embodiments may be used in combination with each other as desired. That one feature may not be illustrated in all of the embodiments and is not meant to be construed that it may not be, but is done for brevity of description. Thus, the various features of the different embodiments may be mixed and matched as desired to form new embodiments, whether or not the new embodiments are expressly described. All combinations or permutations of features described herein are covered by this disclosure.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A strut assembly for an aircraft, comprising:
   a hollow rod having a body with a first distal end spaced from a second distal end by a length of the body;
   a wire rope located inside the hollow rod and spaced from the body, the wire rope having a first end and a second end and operably coupled to the hollow rod with the first end operably coupled to the first distal end and the second end operably coupled to the second distal end; and
   a first clevis operably coupled to the first distal end of the hollow rod and a second clevis operably coupled to the second distal end of the hollow rod.
2. The strut assembly of clause 1, further comprising a wedge structure mounted on each of the first end and the second end of the wire rope.
3. The strut assembly of any preceding clause, further comprising an end fitting surrounding each wedge structure and where the end fitting is located adjacent the first and second distal ends of the hollow rod.
4. The strut assembly of any preceding clause, further comprising a biasing element operably coupled with each wedge structure and configured to place a spring force on the wedge structure to seat it within the end fitting.
5. The strut assembly of any preceding clause, further comprising an end fitting mounted on each of the first end and second end of the wire rope.
6. The strut assembly of any preceding clause, wherein the end fittings are mounted onto the first distal end and second distal end of the hollow rod, respectively.
7. The strut assembly of any preceding clause, further comprising a compression disc configured to clamp the end fitting to the first distal end.
8. The strut assembly of any preceding clause, wherein the first and second end fittings include threaded portions and the first clevis and second clevis are threadably mounted onto the corresponding first and second end fittings.
9. The strut assembly of any preceding clause, wherein at least one of the first clevis and the second clevis is moveably mounted with respect to the first and second distal ends of the hollow body.
10. The strut assembly of any preceding clause, wherein the wire rope is non-metallic and the hollow rod is metallic.
11. A method of forming a strut assembly, comprising:
   operably coupling a first end fitting to a first end of a wire rope;
   operably coupling a second end fitting to a second end of the wire rope;
   locating the wire rope inside a hollow rod and spaced from a body of the hollow rod;
   operably coupling the first end fitting with a first distal end of the body of the hollow rod;
   operably coupling the second end fitting with a second distal end of the body of the hollow rod; and
   operably coupling a first clevis to the first end fitting and a second clevis to the second end fitting.
12. The method of any preceding clause, further comprising mounting a first wedge assembly to the first end of the wire rope and operably coupling the first end fitting to the first end via the first wedge assembly.
13. The method of any preceding clause, further comprising loading the first wedge assembly away from the first distal end utilizing a biasing element.
14. The method of any preceding clause, wherein locating the wire rope inside the hollow rod occurs prior to operably coupling the second end fitting to the second end of the wire rope.
15. The method of any preceding clause, wherein operably coupling the first clevis and the second clevis to the corresponding first and second end fittings includes threadably mounting the first clevis and the second clevis.
16. The method of any preceding clause, further comprising applying a tension force to the wire rope.
17. The method of any preceding clause, further comprising adjusting a position of the first clevis with respect to the first end fitting to adjust a length of the strut assembly.
18. A method of transferring forces via a strut assembly having a hollow rod and a clevis at first and second ends of the hollow rod, comprising:
   transferring compressive force via the hollow rod; and
   transferring a tensile load via a wire rope within the hollow rod where the wire rope and the hollow rod are operably coupled at their distal ends and spaced from each other along a length of the hollow rod.
19. The method of any preceding clause, wherein transferring the tensile load comprises transferring an entire tensile load from the first or second clevis to the wire rope without tensile load transfer to the hollow rod.
20. The method of any preceding clause, wherein the wire rope is non-metallic and the hollow rod is metallic.

## Claims

1. A strut assembly (20, 120) for an aircraft (10), comprising:
a hollow rod (21, 121) having a body (22, 122) with a first distal end (24, 124) spaced from a second distal end (26, 126) by a length (28) of the body (22, 122);
a wire rope (30, 130) located inside the hollow rod (21, 121) and spaced from the body (22, 122), the wire rope (30, 130) having a first end (31, 131) and a second end (32, 132) and operably coupled to the hollow rod (21, 121) with the first end (31, 131) operably coupled to the first distal end (24, 124) and the second end (32, 132) operably coupled to the second distal end (26, 126); and
a first clevis (51, 151) operably coupled to the first distal end (24, 124) of the hollow rod (21, 121) and a second clevis (52, 152) operably coupled to the second distal end (26, 126) of the hollow rod (21, 121).

2. The strut assembly (20, 120) of claim 1, further comprising a wedge structure (70) mounted on each of the first end (31, 131) and the second end (32, 132) of the wire rope (30, 130).

3. The strut assembly (20, 120) of claim 2, further comprising an end fitting (41, 42, 141, 142) surrounding each wedge structure (70) and where the end fitting (41, 42, 141, 142) is located adjacent the first and second distal ends (24, 26, 124, 126) of the hollow rod (21, 121).

4. The strut assembly (20, 120) of claim 3, further comprising a biasing element (72, 172) operably coupled with each wedge structure (70) and configured to place a spring force on the wedge structure (70) to seat it within the end fitting (41, 42, 141, 142).

5. The strut assembly (20, 120) of claim 1, further comprising an end fitting (41, 42, 141, 142) mounted on each of the first end (31, 131) and second end (32, 132) of the wire rope (30, 130).

6. The strut assembly (20, 120) of claim 5, wherein the end fittings (41, 42, 141, 142) are mounted onto the first distal end (24, 124) and second distal end (26, 126) of the hollow rod (21, 121), respectively.

7. The strut assembly (20, 120) of claim 6, further comprising a compression disc (180) configured to clamp the end fitting (41, 42, 141, 142) to the first distal end (24, 124).

8. The strut assembly (20, 120) of claim 7, wherein the first and second end fittings (41, 42, 141, 142) include threaded portions (78, 178) and the first clevis (51, 151) and second clevis (52, 152) are threadably mounted onto the corresponding first and second end fittings (41, 42, 141, 142).

9. The strut assembly (20, 120) of any preceding claim, wherein at least one of the first clevis (51, 151) and the second clevis (52, 152) is moveably mounted with respect to the first and second distal ends (24, 26, 124, 126) of the hollow body (22, 122).

10. The strut assembly (20, 120) of any preceding claim, wherein the wire rope (30, 130) is non-metallic and the hollow rod (21, 121) is metallic.

11. A method of forming a strut assembly (20, 120), comprising:
operably coupling a first end fitting to a first end of a wire rope (30, 130);
operably coupling a second end fitting to a second end of the wire rope (30, 130);
locating the wire rope inside a hollow rod (21, 121) and spaced from a body of the hollow rod;
operably coupling the first end fitting with a first distal end of the body of the hollow rod;
operably coupling the second end fitting with a second distal end of the body of the hollow rod; and
operably coupling a first clevis to the first end fitting and a second clevis to the second end fitting.

12. The method of claim 11, further comprising mounting a first wedge assembly to the first end of the wire rope and operably coupling the first end fitting to the first end via the first wedge assembly.

13. The method of claim 12, further comprising loading the first wedge assembly away from the first distal end utilizing a biasing element.

14. The method of claim 13, wherein locating the wire rope inside the hollow rod occurs prior to operably coupling the second end fitting to the second end of the wire rope.

15. A method of transferring forces via a strut assembly (20, 120) having a hollow rod (21, 121) and a clevis at first and second ends of the hollow rod, comprising:
transferring compressive force via the hollow rod (21, 121); and
transferring a tensile load via a wire rope (30, 130) within the hollow rod where the wire rope and the hollow rod are operably coupled at their distal ends and spaced from each other along a length of the hollow rod.
